# EUROPÄISCHE PATENTSCHRIFT

(11) **EP 0 819 372 B1**
(45) Veröffentlichungstag und Bekanntmachung des Hinweises auf die Patenterteilung: **07.03.2001**
(21) Anmeldenummer: 97110916.0
(22) Anmeldetag: 02.07.1997
(51) Int. Cl.: A01D 78/10

(54) **Kreiselschwader**
Rotary swather
Andaineuse rotative

(30) Priorität: 16.07.1996 DE 19628607
(43) Veröffentlichungstag der Anmeldung: 21.01.1998
(73) Patentinhaber: CLAAS SAULGAU GMBH, D-88340 Saulgau (DE)
(72) Erfinder: Deni, Franz, 88340 Saulgau-Bogenweiler (DE); Geng, Manfred, 88348 Saulgau (DE)

(56) Entgegenhaltungen:
- EP-A- 0 498 192
- EP-A- 0 539 662
- EP-A- 0 706 751
- DE-A- 19 546 914
- FR-A- 2 147 578
- FR-A- 2 299 799
- FR-A- 2 663 189
- GB-A- 1 055 438

## Beschreibung

Die Erfindung bezieht sich auf einen Kreiselschwader nach der Deutschen Patentanmeldung 195 46 914.3.

Kreiselschwader dieser Art haben zwei paarig nebeneinander an einem Fahrgestell mit Laufrädern angeordnete Schwadkreisel, denen ein dritter, und bei einer Ausführung mit einer größeren Arbeitsbreite auch ein vierter Schwadkreisel gestaffelt seitlich ausladend in Fahrtrichtung vorgeordnet sind. Bei der Arbeit bilden die vorauslaufenden Schwadkreisel Einzelschwade, die entweder von den paarig nachlaufenden Schwadkreiseln aufgenommen und zusammen mit dem von diesen nachlaufenden Schwadkreiseln aufgesammelten Erntegut als Großschwad, oder auch für sich als Einzelschwad abgelegt werden.

Die Erfindung bezweckt eine Verbesserung des Nachlauf-Verhaltens der Maschine während der Kurvenfahrt und eine Erleichterung der Umstellmöglichkeit der Maschine für eine gewünschte Ablage des zusammengerechten Erntegutes als Groß-, Doppel- oder Einzelschwaden sowie eine Erweiterung der Funktionsmöglichkeit eines derartigen Schwaders.

Die gewünschten Verbesserungen werden erfindungsgemäß durch Maßnahmen erzielt, wie sie in den Kennzeichen der Patentansprüche 1 bis 6 vorgeschlagen sind.

Anhand der Zeichnung - stets in schematischer Draufsicht auf eine erfindungsgemäße Maschine betrachtet - ist die Erfindung beispielhaft erläutert. Es zeigen:

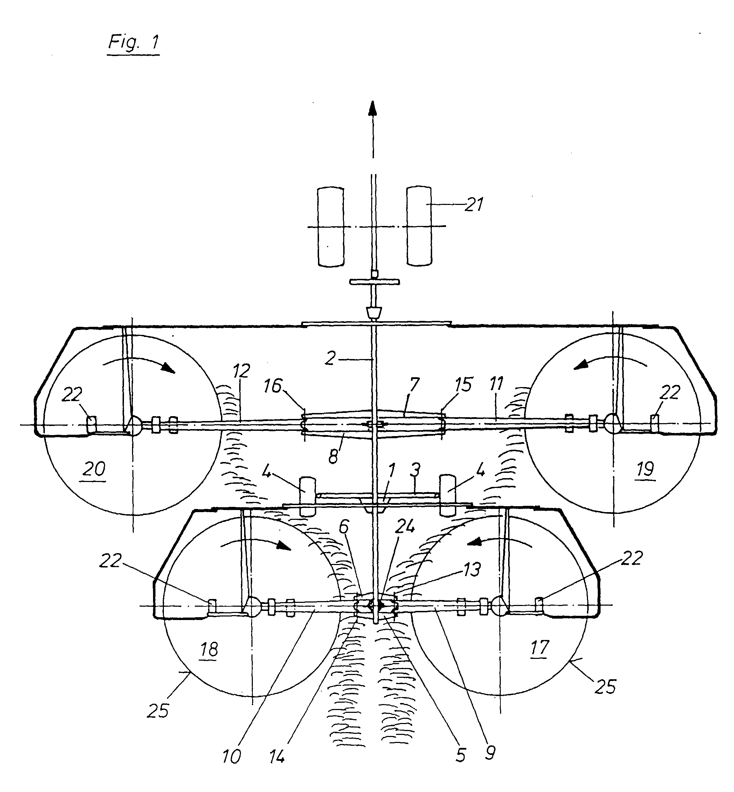

- Figur 1:: den erfindungsgemäßen Schwader mit 4 paarweise gegenläufigen Schwadkreiseln in Arbeitsstellung zur Bildung eines übergroßen Mittelschwades
- Figur 2:: den Schwader nach Figur 1 mit in ihrer Drehrichtung veränderten und in ihrem Abstand zusammengeschobenen hinteren Schwadkreiseln zur Bildung zweier Doppelschwaden,
- Figur 3:: den Kreiselschwader nach Figur 2 mit in ihrer Drehrichtung veränderten vorlaufenden Schwadkreiseln zur Bildung von vier Einzelschwaden

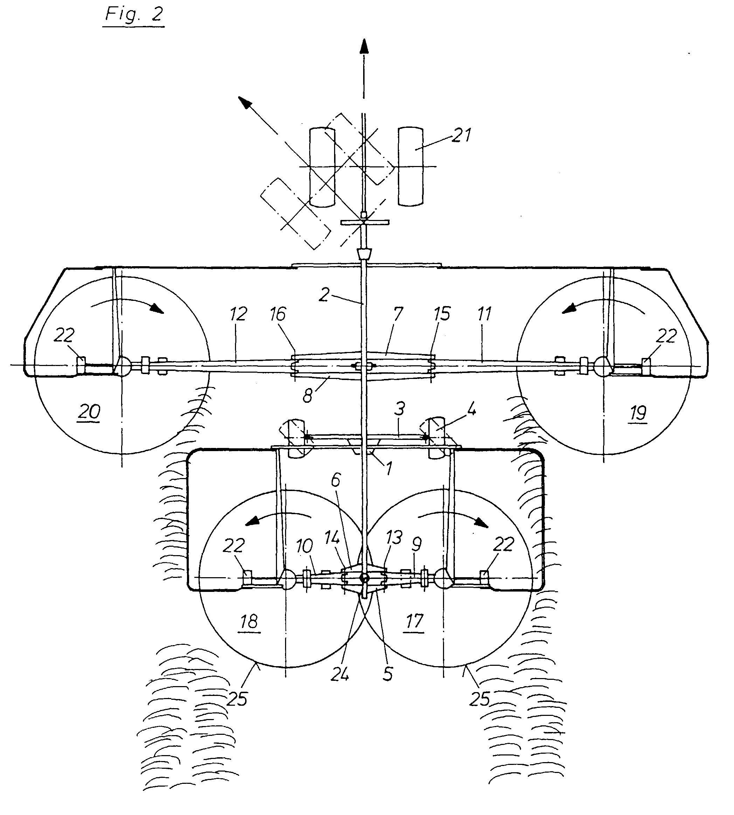

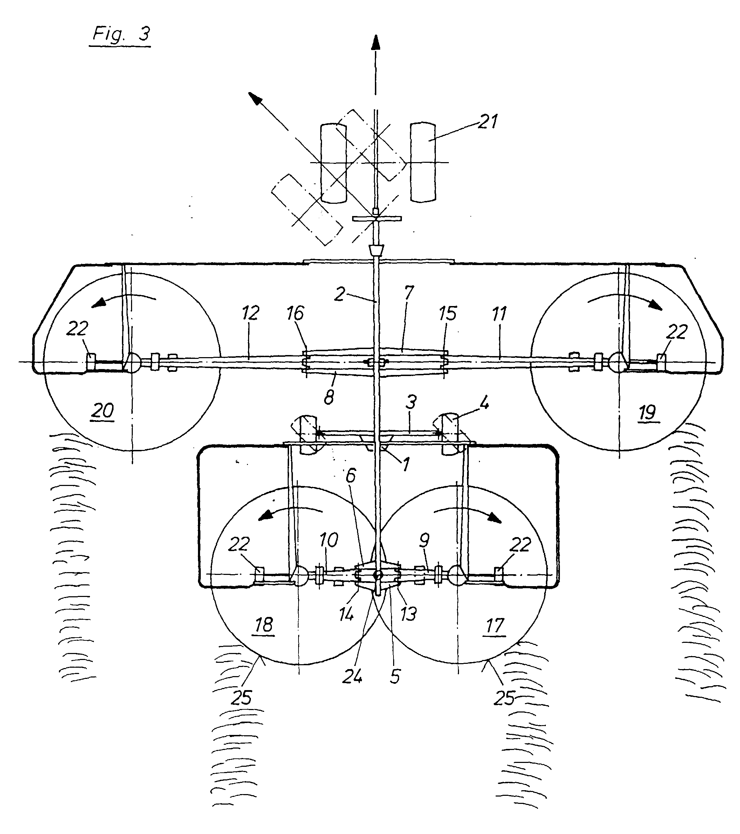

Mit (1) ist das Fahrgestell eines gezogenen Kreiselschwaders bezeichnet, das aus einem gleichzeitig die Deichsel bildenden Längsholm (2),einer Laufachse (3) und zwei richtungsverstellbaren Laufrädern (4) (in Figuren 2 und 3 gestrichelt mit dem ziehenden Schlepper (21) dargestellt) besteht. Die Richtungsverstellung der Laufräder kann in einer dem Fachmann geläufigen Weise erfolgen.

An dem Längsholm (2) sind Konsolen (5, 6, 7, 8) starr befestigt, in denen Tragarme (9, 10, 11, 12) über parallel zum Holm (2) verlaufende Schwenkachsen (13, 14, 15, 16) (über nicht dargestellte Stellmittel) hochschwenkbar gelagert sind. An den freien Enden der Tragarme sind angetriebene Schwadkreisel (17, 18, 19, 20) befestigt, deren Drehrichtung entsprechend den angegebenen Pfeilrichtungen veränderbar ist. Für die in Fahrtrichtung nachlaufenden Schwadkreisel (17, 18) kann die Drehrichtungsumkehr in einfacher Weise dadurch erfolgen, daß diese Schwadkreisel (17, 18) gemeinsam um eine vertikale Achse (24) an dem nach hinten verlängerten Längsholm (2) um 180° verschwenkt und wieder festgestellt werden. Für die Aufrechterhaltung der Schwadfunktion müßten dazu dann noch die Steuerkurven für die Zinkensteuerung gleichfalls um 180° um die Drehachsen der Schwadkreisel (17, 18) verschwenkt und festgestellt werden. Die konstruktiven Gestaltungen hierzu sind dem Fachmann geläufige Maßnahmen, so daß auf eine nähere Beschreibung verzichtet wird. Gleiches gilt auch für die Verschiebe- und Feststellmöglichkeit der hinteren Schwadkreisel (17, 18) und der vorderen Schwadkreisel (19, 20) in ihrem seitlichen Abstand zueinander.

Die Schwadkreisel (17, 18, 19, 20) stützen sich auf ein eigenes Fahrwerk mit je zwei Stützrädern (22) ab. Die Stützräder (22) können für eine bessere Kurvengängigkeit der Maschine als Nachlaufräder gestaltet sein. Statt auf ein zweirädriges Fahrgestell können sich die Schwadkreisel auch auf ein an sich bekanntes vierrädriges Tandemfahrwerk mit Nachlaufrädern abstützen.

## Patentansprüche

1. Kreiselschwader mit drei oder vier um etwa vertikale Achsen umlaufend angetriebenen Schwadkreiseln (17, 18, 19, 20) zur Bildung eines mittig zwschen zwei Schwadkreiseln abgelegten Großschwades oder mehrerer seitlich eines SchwadkreiselsabgelegtenKleinschwaden,bzw.Doppelschwaden,wobei-inFahrtrichtung gesehen - zwei paarig nebeneinander angeordneten Schwadkreiseln (17, 18) ein dritter und gegebenenfalls ein vierter Schwadkreisel (19, 20) gestaffelt seitlich ausladend in Fahrtrichtung vorgeordnet sind, und wobei weiter die einzelnen Schwadkreisel (17, 18, 19, 20) durch Hochschwenken aus der Arbeitsstellung bringbar und an einem gezogenen Fahrgestell (1, 2, 3, 4) befestigt sind, dadurch gekennzeichnet, daß die Laufräder (4) des Fahrgestelles (1, 2, 3, 4) in dem Zwischenraum zwischen den paarig nebeneinander angeordneten Schwadkreiseln (17, 18) und den diesen gestaffelt vorgeordneten Schwadkreiseln (19, 20) angeordnet sind.

2. Kreiselschwader nach Anspruch 1, dadurch gekennzeichnet, daß die Laufräder (4) in bekannter Weise richtungsverstellbar sind.

3. Kreiselschwader nach einem der Ansprüche 1 oder 2, dadurch gekennzeichnet, daß die Schwadkreisel (17, 18, 19, 20) in bekannter Weise in ihrer Drehrichtung umkehrbar sind.

4. Kreiselschwader nach einem oder mehreren der Ansprüche 1 bis 3, dadurch gekennzeichnet, daß für eine Drehrichtungsumkehr die paarig nebeneinander angeordneten Schwadkreisel (17, 18) gemeinsam um eine im mittleren Bereich zwischen ihnen angeordnete vertikale Achse (24) am Fahrgestell (1, 2, 3, 4) um 180° und ihre Steuerkurven für die Zinkensteuerung gleichfalls um 180° um die Drehachsen der Schwadkreisel (17, 18) schwenk- und feststellbar sind.

5. Kreiselschwader nach Anspruch 4, dadurch gekennzeichnet, daß die paarig nebeneinander angeordneten Schwadkreisel (17, 18) in ihrem Abstand zueinander so verschieb- und feststellbar sind, daß ihre Zinkenumlaufbahnen (25) sich im mittleren Bereich zwischen ihnen überschneiden oder einen Abstand für eine Großschwadablage zueinander haben.

6. Kreiselschwader nach einem oder mehreren der Ansprüche 1 bis 5, dadurch gekennzeichnet, daß die in Fahrtrichtung vorgeordneten Schwadkreisel (19, 20) in ihrem Abstand zueinander verschieb- und feststellbar sind.

## Claims

1. A rotor-type windrower comprising three or four windrowing rotors (17, 18, 19, 20) which are driven in rotation about substantially vertical axes for forming a large windrow which is centrally deposited between two windrowing rotors or a plurality of small windrows which are deposited laterally of a windrowing rotor, or double windrows, wherein - viewed in the direction of travel - arranged in the direction of travel in front of two windrowing rotors (17, 18) arranged in paired mutually juxtaposed relationship are a third and possibly a fourth windrowing rotor (19, 20) in staggered laterally projecting relationship, and wherein moreover the individual windrowing rotors (17, 18, 19, 20) can be moved by upward pivotal movement out of the working position and are fixed to a towed chassis (1, 2, 3, 4), characterised in that the support wheels (4) of the chassis (1, 2, 3, 4) are arranged in the intermediate space between the windrowing rotors (17, 18) which are arranged in paired mutually juxtaposed relationship and the windrowing rotors (19, 20) which are arranged in staggered relationship in front thereof.

2. A rotor-type windrower according to claim 1 characterised in that the support wheels (4) are adjustable in direction in known manner.

3. A rotor-type windrower according to one of claims 1 and 2 characterised in that the windrowing rotors (17, 18, 19, 20) are reversible in their direction of rotation in known manner.

4. A rotor-type windrower according to one or more of claims 1 to 3 characterised in that for a reversal in the direction of rotation the windrowing rotors (17, 18) which are arranged in paired mutually juxtaposed relationship are pivotable and fixable jointly on the chassis (1, 2, 3, 4) through 180° about a vertical axis (24) which is arranged in the central region between them and their control cams for the prongs control are likewise pivotable and fixable about the axes of rotation of the windrowing rotors (17, 18) through 180°.

5. A rotor-type windrower according to claim 4 characterised in that the windrowing rotors (17, 18) which are arranged in paired mutually juxtaposed relationship are displaceable and fixable in their spacing relative to each other in such a way that their paths (25) of rotary movement of their prongs overlap in the central region between them or have a spacing relative to each other for depositing a large windrow.

6. A rotor-type windrower according to one or more of claims 1 to 5 characterised in that the windrowing rotors (19, 20) which are arranged at the front in the direction of travel are displaceable and fixable in their spacing relative to each other.

## Revendications

1. Andaineuse rotative comportant trois ou quatre toupies (17, 18, 19, 20) entraînées en rotation autour d'axes sensiblement verticaux pour former un gros andain au milieu, entre deux toupies d'andaineuse, ou plusieurs petits andains ou des andains doubles, déposés sur le côté d'une toupie d'andaineuse, dans laquelle, vu dans la direction de déplacement, une troisième toupie et le cas échéant une quatrième toupie (19, 20) sont disposées de manière décalée devant deux toupies d'andaineuse (17, 18) placées côte à côte, en une paire, vu dans la direction de déplacement, et les différentes toupies (17, 18, 19, 20) peuvent être amenées hors de la position de travail par pivotement vers le haut et sont montées sur un châssis (1, 2, 3 ,4) tracté, caractérisée en ce que les roues porteuses (4) du châssis (1, 2, 3, 4) sont disposées dans l'espace intermédiaire entre les toupies (17, 18) disposées côte à côte en paire et les toupies (19, 20) disposées devant celles-ci, de manière décalée.

2. Andaineuse selon la revendication 1, caractérisée en ce que les roues porteuses (4), de manière connue, sont orientables.

3. Andaineuse selon une des revendications 1 ou 2, caractérisée en ce que le sens de rotation des toupies (17, 18, 19, 20), de manière connue, peut être inversé.

4. Andaineuse selon une ou plusieurs des revendications 1 à 3. caractérisée en ce que pour un changement de sens de rotation, les toupies (17, 18) disposées côte à côte, en une paire, peuvent pivoter simultanément de 180° autour d'un axe (24) vertical prévu sur le châssis, dans la zone médiane entre les deux toupies, et être immobilisées, et que leurs cames de commande des dents peuvent également pivoter de 180° autour des axes de rotation des toupies (17, 18) et être immobilisées.

5. Andaineuse selon la revendication 4, caractérisée en ce que la distance entre les toupies (17, 18) disposées côte à côte en paire peut être modifiée et les toupies immobilisées de telle manière que les trajectoires de déplacement des dents (25) se coupent dans la région médiane entre les toupies ou soient espacées l'une par rapport à l'autre pour former de gros andains.

6. Andaineuse selon une ou plusieurs des revendications 1 à 5, caractérisée en ce que la distance entre les toupies (19, 20) placées à l'avant dans la direction de déplacement peut être modifiée et les toupies immobilisées.
